# EUROPÄISCHE PATENTSCHRIFT

(11) **EP 1 731 371 B1**
(45) Veröffentlichungstag und Bekanntmachung des Hinweises auf die Patenterteilung: **15.12.2010**
(21) Anmeldenummer: 05012317.3
(22) Anmeldetag: 08.06.2005
(51) Int. Cl.: B60R 13/00

(54) **Befestigungsvorrichtung zur lösbaren Befestigung eines Ziergegenstandes**
Device for removably attaching an article of ornament.
Dispositif de fixation pour un objet d'ornement amovible

(43) Veröffentlichungstag der Anmeldung: 13.12.2006
(73) Patentinhaber: Neuss, Marc, 47807 Krefeld (DE)
(72) Erfinder: Neuss, Marc, 47807 Krefeld (DE)
(74) Vertreter: DR. STARK & PARTNER

(56) Entgegenhaltungen:
- EP-A- 0 519 126
- DE-A1- 3 636 582
- DE-A1- 4 407 775
- US-A- 4 988 065
- US-A- 5 073 417
- US-A- 5 144 281
- US-A- 5 585 151

## Beschreibung

Die Erfindung betrifft eine Befestigungsvorrichtung zur lösbaren Befestigung eines Ziergegenstandes, insbesondere einer Zierfigur, an einem Kraftfahrzeug, wobei zum einen der Ziergegenstand in montiertem Zustand aus dem Profil des Kraftfahrzeugs herausragend angeordnet ist und die Befestigungsvorrichtung gegenüber dem Ziergegenstand nicht wesentlich aus dem Profil des Kraftfahrzeugs herausragt, und wobei zum anderen die Befestigungsvorrichtung derart ausgebildet ist, dass der Ziergegenstand um eine in etwa orthogonal zum generellen Verlauf des Profils des Kraftfahrzeugs ausgerichtete Drehachse A unter Krafteinwirkung drehbar ist. Üblicherweise ist die Drehachse dabei orthogonal zu der relevanten Karosseriefläche, welche zumeist die Motorhaube ist. Die Drehachse kann dabei aber auch senkrecht zu einer anderen Ebene, wie z. B. dem Kotflügel, sein, je nachdem, an welcher Stelle der Ziergegenstand angebracht ist. Dabei sind insbesondere Kühlerfiguren, aber auch eine technische Funktion aufweisende Gegenstände wie Antennen oder Rückspiegel von dem Begriff "Ziergegenstand" umfasst.

Aus der Praxis sind derartige Befestigungsvorrichtungen bekannt, bei denen der Ziergegenstand durch unterschiedliche Konstruktionen lösbar gehalten ist, um bei einem eventuellen Unfall nicht als starres Hindernis ein hohes Verletzungspotenzial mit sich zu bringen.

So ist beispielsweise in der DE 40 09 206 C2 eine Befestigung mit einer schwalbenschwanzförmige Nut/Federverbindung vorgesehen, durch welche der Ziergegenstand in einer Längsrichtung aus seiner Befestigung gelöst werden kann.

Nachteilig hierbei ist, dass bei Krafteinwirkungen, die nicht mit dieser Bewegungsrichtung fluchten, ein Verkanten in der Nut/Federverbindung eintritt und der Ziergegenstand insoweit nicht aus seiner Halterung gelöst werden kann. Hierdurch werden dann erhöhte Verletzungsgefahren begründet, die in der Praxis jedoch zu vermeiden sind.

Aus der DE 200 01 572 U1 wiederum ist eine Haltevorrichtung für eine Zierfigur bekannt, bei der die Figur durch eine unterseitig vorgesehene Zugfeder gehalten ist, welche unter relativ hoher Krafteinwirkung selbsttätig lösbar und unter Vorspannung an dem Halteelement befestigt ist. Durch ein solches Sollbruchelement wird zwar sichergestellt, dass ein Auslösen der Zierfigur bei Überlast in beliebiger Richtung erfolgen kann, durch die dabei erforderliche Zerstörung des Sollbruchelements ist jedoch eine erneute Anbringung ohne Bauteiletausch und aufwändige Montagearbeiten nicht möglich. Insoweit kann die Zierfigur, beispielsweise wenn das Fahrzeug in einer eher unsicheren Umgebung abgestellt wird, nicht prophylaktisch vom Fahrzeug entfernt werden, um einem eventuellen Diebstahl insoweit vorzubeugen.

Aus der US 4,988,065 sind alle Merkmale des Oberbegriffs der Ansprüche 1 und 3 bekannt.

Aufgabe der Erfindung ist es insoweit, die vorgenannten Nachteile zu vermeiden und eine sichere und auch gut zur Sicherung gegen Diebstahl geeignete Befestigungsvorrichtung für die lösbare Befestigung eines Ziergegenstandes an einem Kraftfahrzeug anzugeben.

Diese Aufgabe wird bei einer Befestigungsvorrichtung der eingangs genannten Art dadurch gelöst, dass für die in alle Richtungen bei jeweils über einem vorbestimmten Auslösewert liegender Krafteinwirkung lösbare Befestigung eine Befestigungseinrichtung vorgesehen ist, die einerseits ein am Ziergegenstand angeordnetes und von diesem weg weisendes, um die Drehachse A rotationssymmetrisch ausgebildetes Befestigungselement aufweist und andererseits eine Halterung für das Befestigungselement beinhaltet, und dass die Halterung eine Ausnehmung zur eingeführten Aufnahme des Befestigungselementes aufweist, wobei das Befestigungselement einen in die Ausnehmung einführbaren Teilbereich aufweist, der zur seitlichen Führung mit Anlageflächen der Ausnehmung korrespondiert, und dass im oberen Bereich der Ausnehmung der Halterung zumindest ein gegen eine Federkraft orthogonal zu der Drehachse auslenkbares, einen vorspringend ausgebildeten Bereich des Teilbereichs des Befestigungselementes auf der dem Ziergegenstand zugewandten Seite des Befestigungselementes hintergreifendes Halteelement vorgesehen ist, wobei das Befestigungselement sich sowohl oberhalb als auch unterhalb des Teilbereichs zumindest jeweils etwas verjüngend ausgebildet ist.

Hierdurch kann zum einen bei einem Unfall oder dergleichen der Ziergegenstand durch Überlast in jede beliebige Richtung verdreht werden, er kann aber auch durch annähernd übereinstimmende Krafteinwirkung aus nahezu jeder beliebigen Richtung, z. B. auch von schräg unten oder seitlich schräg, aus seiner Halterung entfernt werden und ist insoweit nachgiebig genug, dass schwere Verletzungen vermieden werden, wie sie bei einem starren und unnachgiebigen sowie nicht lösbarem Zierelement erfolgen würden. Durch die spezielle Art der Befestigung kann der Ziergegenstand auch ohne Beschädigung eines Teilelementes der Befestigungsvorrichtung entfernt und wieder eingesetzt werden, so dass insbesondere ein vorübergehendes Entfernen möglich ist, beispielsweise bei Abstellen des Fahrzeuges in einer unsicheren Gegend oder aber bei Benutzung des Fahrzeuges in einem Gebiet, wo aufgrund gesetzlicher Bestimmungen Ziergegenstände nicht erlaubt sind.

Vorzugsweise kann der Teilbereich des Befestigungselementes zumindest unterseitig rotationssymmetrisch und in etwa kugelsegmentförmig, insbesondere als Vollkugel, ausgebildet sein, so dass neben einer einfachen geometrischen Ausgestaltung eine in alle Richtungen gleichermaßen ausgebildete Befestigung gegeben ist.

Auch kann wenigstens ein Halteelement als ein Sprengring ausgebildet sein, so dass die Befestigung in der Art eines üblichen Elementes mit Kugelkopf und Sprengring ausgebildet sein kann. Hierbei kann die Haltekraft des Sprengrings ganz spezifisch auf die im Fahrbetrieb erforderlichen Belastungen abgestimmt sein, so dass zum einen eine sichere Befestigung der Zierfigur gewährleistet ist, zum anderen jedoch eine möglichst geringe Gegenkraft im Falle eines Unfalls schwere Verletzungen vermeidet.

Dabei kann der Sprengring vorzugsweise so angeordnet sein, dass er mit einem wesentlichen Anteil seiner Ringfläche, insbesondere mit seiner gesamten Ringfläche, im eingesetzten Zustand mit dem Kugelkopf in Kontakt steht.

Erfindungsgemäß kann wenigstens ein Halteelement als ein seitlicher Riegelblock ausgebildet sein, so dass insbesondere bei mehreren Riegelblöcken unterschiedliche Haltekräfte in verschiedenen Richtungen realisiert werden können. Hierdurch können höhere oder geringere Auslöseschwellen in verschiedenen Ausrichtungen bezogen auf das Kraftfahrzeug resultieren, die entsprechend unterschiedlichen Krafteinwirkungen bei verschiedenen Unfallsituationen Rechnung tragen.

Auch kann wenigstens ein Halteelement als ein formschlüssiges Verbindungselement mit begrenzter Festigkeit ausgebildet sein.

Die Erfindung betrifft weiterhin eine Befestigungsvorrichtung zur lösbaren Befestigung eines Ziergegenstandes, insbesondere einer Zierfigur, an einem Kraftfahrzeug, wobei der Ziergegenstand in montiertem Zustand aus dem Profil des Kraftfahrzeugs herausragend angeordnet ist und die Befestigungsvorrichtung gegenüber dem Ziergegenstand nicht wesentlich aus dem Profil des Kraftfahrzeugs herausragt, und wobei insbesondere die Befestigung derart ausgebildet ist, dass der Ziergegenstand um eine in etwa orthogonal zum generellen Verlauf des Profils des Kraftfahrzeugs ausgerichtete Drehachse A unter Krafteinwirkung drehbar ist.

Die aus der Praxis bekannten Befestigungsvorrichtungen wurden einschließlich der damit verbundenen Nachteile bereits eingangs erläutert.

Die erfindungsgemäße Aufgabe wird insoweit weiterhin dadurch gelöst, dass für die in alle Richtungen bei jeweils über einem vorbestimmten Auslösewert liegender Krafteinwirkung lösbare Befestigung eine Befestigungseinrichtung vorgesehen ist, die einerseits ein am Ziergegenstand angeordnetes und von diesem weg weisendes, um die Drehachse A rotationssymmetrisch ausgebildetes Befestigungselement aufweist und andererseits eine Halterung für das Befestigungselement beinhaltet, wobei zum einen das Befestigungselement einen vorspringend ausgebildeten Bereich aufweist, zum anderen die Halterung mit einer entsprechenden Ausnehmung versehen ist und eine bei Überlast versagende Verklebung den Bereich und die Ausnehmung miteinander verbindet. Hierdurch kann mit einem sehr einfachen technischen Aufbau eine in allen Richtungen bei in etwa gleicher Kraftbeanspruchung auslösende Befestigung realisiert werden.

Sowohl durch die spezifische Haltekraft des Klebers als auch durch die geometrische Gestaltung der Klebeflächen, insbesondere dem Steigungswinkel der Klebeflächen, kann eine gezielte Einstellung der maximalen Haltekraft erfolgen. Dabei können die Klebeflächen zumindest teilweise stetig steigend, insbesondere als Konus bzw. als Halbkugel, ausgebildet sein. Nach erfolgtem Lösen ist durch erneutes Verkleben leicht eine Wiederanbringung möglich, ohne dass zerstörte Bauteile aufwendig ausgetauscht werden müssen.

Bei einem bevorzugten Ausführungsbeispiel der Erfindung kann eine Diebstahlsicherung vorgesehen sein, welche einen insbesondere als induktiver Näherungsschalter ausgebildeten Sensor zur Detektion des Entfernens der Zierfigur von der Halterung der Befestigungsvorrichtung beinhaltet und mit einer Signaleinrichtung für zur Anzeige des Entfernens der Zierfigur verbunden ist, so dass trotz des Vorteils der leichten und insbesondere auch zerstörungsfreien Entfernungsmöglichkeit des Ziergegenstandes keine erhöhte Diebstahlgefahr gegeben ist. Dabei kann die Signaleinrichtung für Fälle des beabsichtigten Entfernens durch den Benutzer des Kraftfahrzeugs selbst deaktivierbar sein, so dass bei Abstellen des Fahrzeugs in unsicheren Gebieten eine prophylaktische Entfernung des Ziergegenstandes durch den Kraftfahrzeugbesitzer selbst erfolgen kann.

Alternativ kann der Sensor auch nach dem kapazitiven, magnetischen, mechanischen, elektrischen bzw. opto-elektrischen Prinzip ein Entfernen des Ziergegenstandes detektieren. Auch sind Kombination der Wirkprinzipien sowie eine Anordnung mehrerer, insbesondere entsprechend unterschiedlicher Verfahren arbeitenden Sensoren möglich.

Vorzugsweise kann ein Fangseil oder dergleichen mit seinem einem Ende an dem Befestigungselement und mit seinem anderen Ende an dem Kraftfahrzeug angebracht sein, so dass auch bei Lösen des Ziergegenstandes aus seiner Befestigungsposition dieser nicht frei in seiner Bewegung ist.

Dabei kann das Fangseil durch die Halterung durchgeführt sein. Das Halteseil kann beispielsweise geradlinig in seiner Länge oder aber aufgewickelt in einer Lagerposition, bei Kühlerfiguren insbesondere unmittelbar unter der Motorhaube, angeordnet sein. Weiterhin kann das Halteseil endseitig an einer Feder befestigt sein, wobei die Federkraft entweder erst nach einem bestimmten Verlagerungsweg des Ziergegenstandes wirksam ist oder aber, beispielsweise bei aufgewickeltem Halteseil, über den gesamten Verlagerungsweg aktiv ist.

Vorteilhafterweise kann Länge des Fangseil geringer sein als der Abstand zwischen der Befestigungsvorrichtung und der Windschutzscheibe des Kraftfahrzeugs, so dass eine Beschädigung der Windschutzscheibe durch den Ziergegenstand vermieden wird.

Erfindungsgemäß kann das Fangseil an dem Ziergegenstand lösbar befestigt sein, so dass auch eine beabsichtigte Demontage des Ziergegenstandes, beispielsweise bei Abstellen des Fahrzeugs in unsicheren Gebieten, durch den Kraftfahrzeugbesitzer selbst erfolgen kann.

Im Folgenden werden in der Zeichnung dargestellte Ausführungsbeispiele der Erfindung erläutert. Es zeigen:
- Fig. 1: eine teilweise Schnittdarstellung eines ersten Ausführungsbeispiels einer erfindungsgemäßen Befestigungsvorrichtung,
- Fig. 2: das Detail "X" des Gegenstandes nach Fig. 1, und
- Fig. 3: eine teilweise Schnittdarstellung eines zweiten Ausführungsbeispiels einer erfindungsgemäßen Befestigungsvorrichtung.

In allen Figuren werden für gleiche bzw. gleichartige Bauteile übereinstimmende Bezugszeichen verwendet.

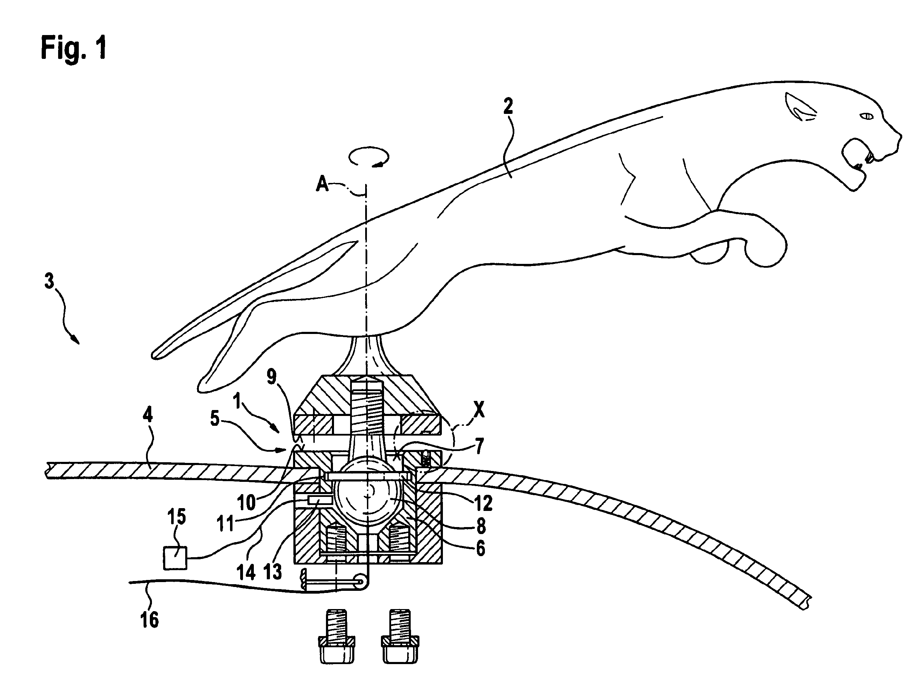

Fig. 1 zeigt eine Befestigungsvorrichtung 1 zur lösbaren Befestigung eines Ziergegenstandes 2 an einem Kraftfahrzeug 3. Die Befestigung erfolgt dabei vorzugsweise an der Motorhaube 4 des Kraftfahrzeuges 3.

Wie aus Fig. 1 deutlich ersichtlich, ragt der Ziergegen-stand 2 im montierten Zustand aus dem Profil des Kraftfahrzeugs 3 heraus, wohingegen die Befestigungsvorrichtung 1 nicht wesentlich aus dem Profil des Kraftfahrzeugs 3 herausragt. Hierbei kann die Befestigungsvorrichtung 1 relativ klein ausgebildet sein und/oder im Wesentlichen innerhalb des Kraftfahrzeugs angeordnet sein.

Um bei Unfällen unnötige Verletzungsrisiken zu vermeiden, ist der Ziergegenstand 2 um eine in etwa orthogonal zum generellen Verlauf des Profils des Kraftfahrzeugs 3 ausgerichtete Drehachse A unter Krafteinwirkung drehbar gelagert.

Für die in alle Richtungen bei jeweils über einem vorbestimmten Auslösewert liegender Krafteinwirkung lösbare Befestigung weist die Befestigungsvorrichtung 1 eine Befestigungseinrichtung 5 auf, die zum einen ein am Ziergegen-stand 2 angeordnetes Befestigungselement aufweist, welches vom Ziergegenstand 2 wegweist und um die Drehachse A rotationssymmetrisch ausgebildet ist. Zum anderen beinhaltet die Befestigungseinrichtung 5 eine Halterung 6 für das Befestigungselement, wobei die Halterung 6 eine Ausnehmung 7 zur eingeführten Aufnahme des Befestigungselementes aufweist.

Das Befestigungselement weist einen in die Ausnehmung 7 einführbaren Teilbereich auf, der zur seitlichen Führung mit den Anlageflächen der Ausnehmung korrespondiert und im dargestellten Ausführungsbeispiel als Vollkugel 8 ausgebildet ist.

Durch die Ausnehmung 7 ist die Vollkugel 8 in seitlicher Richtung geführt und die untere Kontaktfläche 9 des Ziergegenstandes ergibt in Zusammenwirkung mit der oberen Kontaktfläche 10 der Befestigungseinrichtung eine Auflage zur Aufnahme von abwärtsweisenden Kräften.

Ein Herausrutschen der Vollkugel 8 aus der Ausnehmung 7 wird durch einen vorspringend ausgebildeten Bereich der Befestigungseinrichtung 5 gewährleistet, der im dargestellten Ausführungsbeispiel als in einer Nut 11 angeordneter Sprengring 12 ausgebildet ist.

Die Befestigungseinrichtung 5 ist in üblicher Art und Weise an der Motorhaube 4 des Kraftfahrzeuges 3 gehalten, in dem sie durch eine Aussparung in der Motorhaube 4 hindurchgeführt und von unten gekontert ist.

Anstelle oder auch zusätzlich zu dem als Sprengring 12 ausgebildeten Halteelement können noch (auch) andere Halteelemente, beispielsweise allseitiger Verriegelblock oder als formschlüssiges Verbindungselement mit begrenzter Festigkeit vorgesehen sein.

Um unbefugtes Entfernen des aufgrund der besonderen Befestigung zerstörungsfrei entfernbaren Ziergegenstandes 2 zu verhindern, kann eine Diebstahlsicherung vorgesehen sein, die einen insbesondere als induktiver Näherungsschalter ausgebildeten Sensor 13 aufweist, der über eine Leitung 14 mit einer insbesondere als Hupe ausgebildeten Signaleinrichtung 15 verbunden ist.

Durch die kugelförmige Ausgestaltung der Vollkugel 8 ist sichergestellt, dass in jede Richtung ein "Herausschwenken" des einen Elementes der Befestigungseinrichtung 5 aus der Ausnehmung 7 der Halterung 6 möglich ist, ohne dass es zum Verkanten oder dergleichen kommt.

Der Ziergegenstand 2 kann weiterhin durch ein Fangseil 16 gesichert sein, so dass im Auslösefall ein unkontrolliertes Herumfliegen des Ziergegenstandes 2 vermieden wird.

Insbesondere kann bei geeigneter Abstimmung der Länge des Fangseils 16 vermieden werden, dass der Ziergegenstand 2 die Windschutzscheibe des Kraftfahrzeuges 3 erreicht und diese hierdurch beschädigt bzw. gegebenenfalls sogar zerstört wird.

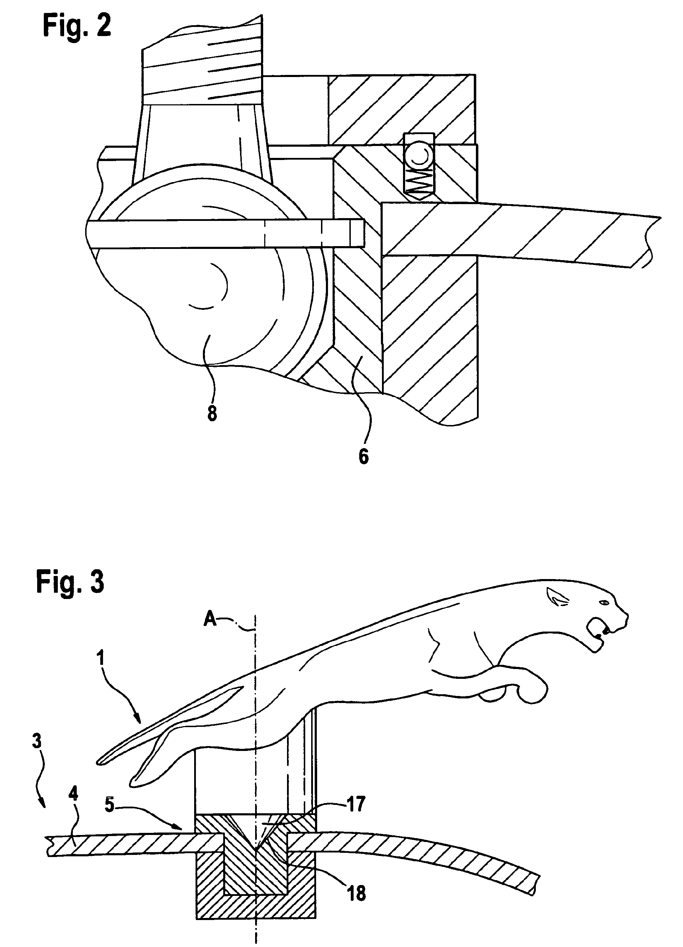

Fig. 2 zeigt das Detail X des Gegenstandes nach Fig. 1, welches durch eine federbelastete Kugel zwar die freie Drehbarkeit des Ziergegenstandes um die Drehachse A ermöglicht, andererseits jedoch eine gewisse Festlegung einer bestimmten Ausrichtung des Ziergegenstandes für eine wunschgemäße Ausrichtung in Fahrtrichtung bzw. bei anderen Ziergegenständen auch quer zur Fahrtrichtung, ermöglicht.

Alternativ kann zu der gezeigten Ausgestaltung mit unterseitig an dem Ziergegenstand angeordnetem und nach unten weisendem Kugelkopf einerseits und der nach oben weisend im Bereich des Profils des Kraftfahrzeugs vorgesehenen Halterung auch die Halterung nach unten weisend unterseitig an dem Ziergegenstand vorgesehen sein und der Kugelkopf nach oben weisend im Bereich des Profils des Kraftfahrzeugs derart angeordnet sein, dass der Ziergegenstand durch Einführen des Kugelkopfs in die Halterung bis über den Widerstand des unter Druck nachgebenden Sprengrings an dem Kraftfahrzeug anbringbar ist.

Somit ist eine beschädigungsfrei und ohne Austausch eines Bestandteiles der Befestigungsvorrichtung erneut anbringbare Befestigung gegeben. Die Auslösung bei übermäßiger Krafteinwirkung erfolgt aufgrund der geometrischen Ausgestaltung der Befestigung jeweils bei in etwa übereinstimmender Krafteinwirkung.

In Fig. 3 ist eine alternative Ausführungsform der erfindungsgemäßen Befestigungsvorrichtung 1 dargestellt, bei der das am Ziergegenstand 2 angeordnete, und um die Drehachse A rotationssymmetrisch ausgebildete Befestigungselement 17 kegelförmig ausgebildet ist und mittels einer bei Überlast versagenden Verklebung in einer entsprechenden Ausnehmung 18 befestigt ist. Optional kann auch die Ausnehmung 18 noch über ein Zwischenelement drehbar gegenüber dem Kraftfahrzeug 3 ausgebildet sein und es können auch weitere Merkmale, wie Diebstahlsicherung oder Halteeinrichtung mit Fangseil oder dergleichen vorgesehen sein.

## Patentansprüche

1. Befestigungsvorrichtung (1) zur lösbaren Befestigung eines Ziergegenstandes (2), insbesondere einer Zierfigur, an einem Kraftfahrzeug (3), wobei zum einen der Ziergegenstand (2) in montiertem Zustand aus dem Profil des Kraftfahrzeugs (3) herausragend angeordnet ist und die Befestigungsvorrichtung (1) gegenüber dem Ziergegenstand (2) nicht wesentlich aus dem Profil des Kraftfahrzeugs (3) herausragt, und wobei zum anderen die Befestigungsvorrichtung (1) derart ausgebildet ist, dass der Ziergegenstand (2) um eine in etwa orthogonal zum generellen Verlauf des Profils des Kraftfahrzeugs (3) ausgerichtete Drehachse A unter Krafteinwirkung drehbar ist, wobei für die in alle Richtungen bei jeweils über einem vorbestimmten Auslösewert liegender Krafteinwirkung lösbare Befestigung eine Befestigungseinrichtung (5) vorgesehen ist, die einerseits ein am Ziergegenstand (2) angeordnetes und von diesem weg weisendes, um die Drehachse A rotationssymmetrisch ausgebildetes Befestigungselement (17) aufweist und andererseits eine Halterung (6) für das Befestigungselement (17) beinhaltet, wobei die Halterung (6) eine Ausnehmung (7) zur eingeführten Aufnahme des Befestigungselementes (17) aufweist, wobei das Befestigungselement (17) einen in die Ausnehmung (7) einführbaren Teilbereich aufweist, der zur seitlichen Führung mit Anlageflächen der Ausnehmung (7) korrespondiert, wobei im oberen Bereich der Ausnehmung (7) der Halterung (6) zumindest ein gegen eine Federkraft orthogonal zu der Drehachse A auslenkbares, einen vorspringend ausgebildeten Bereich des Teilbereichs des Befestigungselementes (17) auf der dem Ziergegenstand (2) zugewandten Seite des Befestigungselementes (17) hintergreifendes Halteelement vorgesehen ist, wobei das Befestigungselement (17) sich sowohl oberhalb als auch unterhalb des Teilbereichs zumindest jeweils etwas verjüngend ausgebildet ist, **dadurch gekennzeichnet dass** wenigstens ein Halteelement als ein Sprengring (12) ausgebildet ist.

2. Befestigungsvorrichtung (1) nach dem vorhergehenden Anspruch, **dadurch gekennzeichnet, dass** der Teilbereich des Befestigungselementes (17) zumindest unterseitig rotationssymmetrisch und in etwa kugelsegmentförmig, insbesondere als Vollkugel (8), ausgebildet ist.

3. Befestigungsvorrichtung (1) zur lösbaren Befestigung eines Ziergegenstandes (2), insbesondere einer Zierfigur, an einem Kraftfahrzeug (3), wobei der Ziergegenstand (2) in montiertem Zustand aus dem Profil des Kraftfahrzeugs (3) herausragend angeordnet ist und die Befestigungsvorrichtung (1) gegenüber dem Ziergegenstand (2) nicht wesentlich aus dem Profil des Kraftfahrzeugs (3) herausragt, und wobei insbesondere die Befestigung derart ausgebildet ist, dass der Ziergegenstand (2) um eine in etwa orthogonal zum generellen Verlauf des Profils des Kraftfahrzeugs (3) ausgerichtete Drehachse A unter Krafteinwirkung drehbar ist, wobei für die in alle Richtungen bei jeweils über einem vorbestimmten Auslösewert liegender Krafteinwirkung lösbare Befestigung eine Befestigungseinrichtung (5) vorgesehen ist, die einerseits ein am Ziergegenstand (2) angeordnetes und von diesem weg weisendes, um die Drehachse A rotationssymmetrisch ausgebildetes Befestigungselement (17) aufweist und andererseits eine Halterung (6) für das Befestigungselement (17) beinhaltet, **dadurch gekennzeichnet** zum einen das Befestigungselement einen vorspringend ausgebildeten Bereich aufweist, zum anderen die Halterung (6) mit einer entsprechenden Ausnehmung (18) versehen ist und eine bei Überlast versagende Verklebung den Bereich und die Ausnehmung (18) miteinander verbindet.

4. Befestigungsvorrichtung (1) nach einem der vorhergehenden Ansprüche, **dadurch gekennzeichnet dass** eine Diebstahlsicherung vorgesehen ist, welche einen insbesondere als induktiver Näherungsschalter ausgebildeten Sensor (13) zur Detektion des Entfernens der Zierfigur von der Halterung der Befestigungsvorrichtung (1) beinhaltet und mit einer Signaleinrichtung für zur Anzeige des Entfernens des Ziergegenstandes (2) verbunden ist.

5. Befestigungsvorrichtung (1) nach einem der vorhergehenden Ansprüche, **dadurch gekennzeichnet, dass** ein Fangseil (16) oder dergleichen mit seinem einem Ende an dem Befestigungselement (17) und mit seinem anderen Ende an dem Kraftfahrzeug (3) angebracht ist

6. Befestigungsvorrichtung (1) nach dem vorhergehenden Anspruch, **dadurch gekennzeichnet, dass** das Fangseil (16) durch die Halterung (6) durchgeführt ist.

7. Befestigungsvorrichtung (1) nach dem vorhergehenden Anspruch, **dadurch gekennzeichnet, dass** die Länge des Fangseil (16) geringer ist als der Abstand zwischen der Befestigungsvorrichtung (1) und der Windschutzscheibe des Kraftfahrzeugs (3).

## Claims

1. Attachment device (1) for removably attaching an article of ornament (2), in particular an ornamental figure, on a motor vehicle (3), wherein, on the one hand, in the mounted state the article of ornament (2) is located protruding from the profile of the motor vehicle (3) and, compared to the article of ornament (2), the attachment device (1) does not protrude substantially from the profile of the motor vehicle (2), and wherein, on the other hand, the attachment device (1) is realized in such a manner that, under the effect of force, the article of ornament (2) is rotatable about an axis of rotation A that is aligned approximately orthogonally with respect to the general development of the profile of the motor vehicle (3), wherein a securement device (5) is provided for the removable securement in all directions in each case when the effect of force is in excess of a predetermined trigger value, said securement device, on the one hand, having a securing element (17), which is located on the article of ornament (2), faces away from said article of ornament and is realized in a rotationally symmetrical manner about the axis of rotation A and, on the other hand, including a holder (6) for the securing element (17), wherein the holder (6) has a recess (7) for the inserted accommodation of the securing element (17), wherein the securing element (17) has a part region which can be inserted into the recess (7) and which, for lateral guiding, corresponds with contact faces of the recess (7), wherein at least one holding element is provided in the upper region of the recess (7) of the holder (6), said holding element being deflectable in opposition to a spring force orthogonally relative to the axis of rotation A and engaging behind a projectingly realised region of the part region of the securing element (17) on the side of the securing element (17) facing the article of ornament, wherein the securing element (17) is realized both above and below the part region in each case at least in a substantially tapering manner, **characterized in that** at least one holding element is realized as a snap ring (12).

2. Attachment device (1) according to the preceding Claim, **characterized in that** the part region of the securing element (17) is realized at least on the underside in a rotationally symmetrical manner and approximately in the form of a spherical segment, in particular as a solid sphere (8).

3. Attachment device (1) for removably attaching an article of ornament (2), in particular an ornamental figure, on a motor vehicle (3), wherein in the mounted state the article of ornament (2) is located protruding from the profile of the motor vehicle (3) and, compared to the article of ornament (2), the attachment device (1) does not protrude substantially from the profile of the motor vehicle (2), and wherein in particular the securement is realized in such a manner that, under the effect of force, the article of ornament (2) is rotatable about an axis of rotation A that is aligned approximately orthogonally with respect to the general development of the profile of the motor vehicle (3), wherein a securement device (5) is provided for the removable securement in all directions in each case when the effect of force is in excess of a predetermined trigger value, said securement device, on the one hand, having a securing element (17), which is located on the article of ornament (2), faces away from said article of ornament and is realized in a rotationally symmetrical manner about the axis of rotation A and, on the other hand, includes a holder (6) for the securing element (17), **characterized in that**, on the one hand, the securing element has a projectingly realized region, on the other hand, the holder (6) is provided with a corresponding recess (18) and an adhesive means that fails under overload connects the region and the recess (18) to each other.

4. Attachment device (1) according to one of the preceding claims, **characterized in that** an anti-theft device is provided, which includes a sensor (13) realized, in particular, as an inductive proximity switch for detecting the removal of the ornamental figure from the holder of the attachment device (1) and is connected to a signalling device to indicate the removal of the article of ornament (2).

5. Attachment device (1) according to one of the preceding claims, **characterized in that** an arrester wire (16) or the like is attached by way of its one end to the securing element (17) and by way of its other end to the motor vehicle (3).

6. Attachment device (1) according to the preceding Claim, **characterized in that** the arrester wire (16) is guided through the holder (6).

7. Attachment device (1) according to the preceding Claim, **characterized in that** the length of the arrester wire (16) is smaller than the distance between the attachment device (1) and the windscreen of the motor vehicle (3).

## Revendications

1. Dispositif de fixation (1) destiné à la fixation amovible, sur un véhicule automobile (3), d'un objet d'ornement (2) se présentant notamment comme un motif décoratif, sachant que, d'une part, ledit objet d'ornement (2) est agencé pour faire saillie, à l'état monté, au-delà du profil dudit véhicule automobile (3), et que ledit dispositif de fixation (1) ne dépasse pas notablement au-delà dudit profil dudit véhicule automobile (3), vis-à-vis dudit objet d'ornement (2) ; sachant que, d'autre part, ledit dispositif de fixation (1) est réalisé de telle sorte que ledit objet d'ornement (2) puisse être animé de rotations, sous l'action de forces, autour d'un axe de rotation A orienté à peu près perpendiculairement à la configuration générale dudit profil dudit véhicule automobile (3) ; sachant qu'il est prévu pour assurer la fixation amovible dans toutes les directions, avec application de force excédant respectivement une valeur de déclenchement prédéterminée, un système de fixation (5) qui, d'une part, est muni d'un élément de fixation (17) réalisé avec symétrie de révolution autour dudit axe de rotation A, et placé sur ledit objet d'ornement (2) en pointant à l'opposé de ce dernier, et qui comprend, d'autre part, un support (6) dédié audit élément de fixation (17) ; sachant que ledit support (6) comporte un évidement (7) conçu pour recevoir ledit élément de fixation (17) à l'état inséré, ledit élément de fixation (17) offrant une région partielle qui peut être insérée dans ledit évidement (7) et concorde avec des surfaces de contact dudit évidement (7), en vue du guidage latéral ; et sachant qu'il est prévu, dans la zone supérieure dudit évidement (7) dudit support (6), au moins un élément de retenue pouvant être dévié perpendiculairement à l'axe de rotation A en opposition à une force élastique et emprisonnant par-derrière, sur le côté dudit élément de fixation (17) pointant vers ledit objet d'ornement (2), une zone réalisée en débord sur ladite région partielle dudit élément de fixation (17), lequel élément de fixation (17) est réalisé pour présenter, respectivement, au moins un rétrécissement sensible tant au-dessus, qu'au-dessous de ladite région partielle, **caractérisé par le fait qu'**au moins un élément de retenue est réalisé sous la forme d'une bague élastique fendue (12).

2. Dispositif de fixation (1) selon la revendication précédente, **caractérisé par le fait que** la région partielle de l'élément de fixation (17) est réalisée, au moins à la face inférieure, avec symétrie de révolution et sensiblement en forme de segment sphérique, notamment sous la forme d'une sphère intégrale (8).

3. Dispositif de fixation (1) destiné à la fixation amovible, sur un véhicule automobile (3), d'un objet d'ornement (2) se présentant notamment comme un motif décoratif, sachant que ledit objet d'ornement (2) est agencé pour faire saillie, à l'état monté, au-delà du profil dudit véhicule automobile (3), et que ledit dispositif de fixation (1) ne dépasse pas notablement au-delà dudit profil dudit véhicule automobile (3), vis-à-vis dudit objet d'ornement (2) ; sachant que la fixation est notamment conçue de façon telle que ledit objet d'ornement (2) puisse être animé de rotations, sous l'action de forces, autour d'un axe de rotation A orienté à peu près perpendiculairement à la configuration générale dudit profil dudit véhicule automobile (3) ; et sachant qu'il est prévu pour assurer la fixation amovible dans toutes les directions, avec application de force excédant respectivement une valeur de déclenchement prédéterminée, un système de fixation (5) qui, d'une part, est muni d'un élément de fixation (17) réalisé avec symétrie de révolution autour dudit axe de rotation A, et placé sur ledit objet d'ornement (2) en pointant à l'opposé de ce dernier, et qui comprend, d'autre part, un support (6) dédié audit élément de fixation (17), **caractérisé par le fait que**, d'une part, l'élément de fixation comporte une zone de réalisation en débord et que, d'autre part, le support (6) est pourvu d'un évidement (18) correspondant, ladite zone et ledit évidement (18) étant reliés mutuellement par une solidarisation collée cédant en présence d'une charge excessive.

4. Dispositif de fixation (1) selon l'une des revendications précédentes, **caractérisé par** la présence d'un antivol qui renferme un capteur (13) notamment réalisé sous la forme d'un interrupteur inductif de proximité, en vue de détecter l'éloignement du motif décoratif d'avec le support dudit dispositif de fixation (1), et est connecté à un système de signalisation destiné à indiquer l'éloignement de l'objet d'ornement (2).

5. Dispositif de fixation (1) selon l'une des revendications précédentes, **caractérisé par le fait qu'**un câble d'arrêt (16), ou élément similaire, est installé sur l'élément de fixation (17) par l'une de ses extrémités, et sur le véhicule automobile (3) par son autre extrémité.

6. Dispositif de fixation (1) selon la revendication précédente, **caractérisé par le fait que** le câble d'arrêt (16) traverse le support (6) de part en part.

7. Dispositif de fixation (1) selon la revendication précédente, **caractérisé par le fait que** la longueur du câble d'arrêt (16) est plus petite que la distance comprise entre ledit dispositif de fixation (1) et le pare-brise du véhicule automobile (3).
